(19) **Europäisches Patentamt / European Patent Office / Office européen des brevets**

(11) **EP 1 326 091 B1**

(12) **FASCICULE DE BREVET EUROPEEN**

(45) Date de publication et mention
de la délivrance du brevet:
**20.01.2010 Bulletin 2010/03**

(51) Int Cl.:
***G01S 13/90*** *(2006.01)*

(21) Numéro de dépôt: **02102720.6**

(22) Date de dépôt: **11.12.2002**

(54) **Procédé d'amélioration de la qualité d'une image radar**

Verfahren zur Verbesserung der Qualität eines Radarbildes

Method for improving the quality of a radar image

(84) Etats contractants désignés:
**DE GB NL SE**

(30) Priorité: **14.12.2001 FR 0116238**

(43) Date de publication de la demande:
**09.07.2003 Bulletin 2003/28**

(73) Titulaire: **Thales**
**92200 Neuilly-sur-Seine (FR)**

(72) Inventeurs:
• **BOSSER, Luc**
**94117 CX, ARCUEIL (FR)**

• **CHAMOUARD, Eric**
**94117 CX, ARCUEIL (FR)**
• **SFEZ, Thierry**
**94117 CX, ARCUEIL (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 544 546     US-A- 5 854 602**
**US-A- 6 046 695**

Printed by Jouve, 75001 PARIS (FR)

**Description**

La présente invention concerne un procédé d'amélioration de la qualité d'images radar et notamment de la qualité des images obtenues par les radars à ouverture synthétique ou SAR pour " Synthetic Aperture Radar " selon la dénomination anglo-saxonne

Les techniques disponibles actuellement permettent d'obtenir des images SAR d'une résolution extrêmement fine - de l'ordre de 50cm à 100Km - mais proposent des images polluées par différents phénomènes parmi lesquels on peut citer :

- Les images d'échos mobiles qui présentent un étalement de spectre important sur l'axe doppler.
- Les images "fantômes" liées aux phénomènes d'ambiguïté en doppler et en distance qui présentent également un étalement de spectre important sur l'axe doppler et l'axe distance.
- Les images doppler parasites issues de l'émergence d'échos forts aux travers de lobes secondaires lointains présents dans le signal imparfaitement focalisé.

Ce dernier problème est surtout sensible sur des images de résolution extrêmement fine et n'est pas résolu par les méthodes classiques d'autofocalisation.

Pour remédier à ces phénomènes de pollution on utilise généralement des méthodes qui présentent des inconvénients et dont les résultats sont imparfaits :

- La suppression des images d'échos mobiles peut être réalisée par extraction de ces échos au moyen de procédés de filtrage spatio-temporel. Ces procédés, de type STAP (SpatioTemporal Adaptative Process), ont notamment pour inconvénients de nécessiter l'utilisation de plusieurs voies de réception et d'apporter une charge de calcul importante. De plus ils n'apportent pas de solution à la pollution liée aux lobes secondaires lointains issus d'échos forts.
- L'émergence d'échos liés au niveau de lobes secondaires lointains est habituellement traitée par des méthodes d'autofocalisation dont l'efficacité n'est pas suffisante dans le cas des images de résolution extrêmement fines.

Aucune de ces méthodes ne s'avère donc efficace pour supprimer les remontées d'échos de fort niveau a travers les lobes secondaires lointains. Ceci représente un inconvénient majeur dans le cas d'images de résolution extrêmement fine.

Un première solution au problème de focalisation d'une image SAR est notamment décrite dans le document de brevet US-A-6046695 de Paul L. Poehler et Al, délivré le 4 avril 2000, qui présente un procédé d'autofocalisation d'une image SAR qui utilise l'image SAR obtenue elle-même pour élaborer a posteriori une fonction de correction finalement appliquée à l'image.

Une autre solution est également décrite dans le document de brevet US-A-5854602 de Herbert C. Stankwitz et Al, délivré le 29 décembre 1998, qui présente un procédé d'autofocalisation d'une image SAR, qui procède à la correction de l'image SAR obtenue par segmentation de l'image et détermination itérative de la valeur de correction de phase à appliquer à chaque segment d'image.

Une autre solution encore est décrite dans la demande de brevet européen publiée le 2 juin 1996 sous la référence 0544 546 A3 déposée par la société Hugues Aircraft, qui présente un procédé d'autofocalisation d'une image SAR, qui procède de manière itérative à la correction de l'image par analyse des cibles présentes dans l'image et élaboration d'une correction de phase à partir de ces cibles.

Un but de l'invention est de pallier les inconvénients précités et en particulier d'apporter une solution à la pollution apportée par les lobes secondaires lointains d'échos de fort niveau.

A cet effet, l'invention a pour objet un procédé d'amélioration d'une image radar, comportant une étape de modélisation du signal S(m,n) reçu par le radar, exprimé dans l'espace "Temps long / Fréquence rapide", en la somme d'un signal focalisé et d'un signal défocalisé, puis une étape de filtrage du signal défocalisé. En particulier pour une case distance D, la décomposition spectrale $S_D(m)$ du signal S(m,n) sur l'axe des fréquences rapides, est modélisé comme suit:

$$S_D(m) = A_D \exp[j(2\pi f \frac{m}{M} + \varphi_D)] + A_D(m)\exp[j(2\pi f \frac{m}{M} + \varphi(m) + \varphi_D)$$

L'étape de filtrage associe la décomposition spectrale sur l'axe des temps longs, du signal $S_D(m)$ et de n signaux obtenus à partir de $S_D(m)$ au travers d'une fenêtre glissante. Elle effectue aussi la recherche du signal minimum à partir des représentations spectrales obtenues.

Avantageusement, cette décomposition spectrale est réalisée par application d'une FFT au signal $S_D(m)$, suivie d'une pondération adaptative destinée à éliminer les lobes secondaires de FFT.

Avantageusement le procédé comporte une étape de suréchantillonnage de l'écho reçu.

L'invention a notamment pour principaux avantages :

- D'apporter une solution globale aux problèmes de pollution liés à la composante du signal résultant des imperfections de l'autofocalisation.
- De ne pas nécessiter la mise en place de plusieurs voies de réception et d'être donc peu coûteuse en matériel et en puissance de calcul.

D'autres caractéristiques et avantages de l'invention apparaîtront au travers de la description qui suit, faite en regard des dessins annexés qui représentent :

La figure 1, l'image SAR d'un écho ponctuel focalisé dans le repère axe doppler / axe distance

La figure 2, l'illustration du passage du domaine axe temps long /axe fréquence rapide au domaine axe doppler / axe distance par une FFT suivant deux dimensions.

La figure 3, l'exposé des étapes possibles du procédé selon l'invention

La figure 4, l'illustration de l'effet de l'étape de filtrage sur un signal ponctuel focalisé modélisé

La figure 5, l'illustration de l'effet de l'étape de filtrage sur un cas particulier de signal ponctuel défocalisé modélisé

La figure 6, L'illustration des étapes précédentes du procédé associées à une étape de suréchantillonnage et une étape de restitution d'une image doppler en sinus cardinal

La figure 7, l'illustration d'une méthode de reconstitution d'un signal temporel extrapolé, à partir du seul lobe principal de son image sur l'axe doppler suréchantillonné.

La figure 8, l'illustration de l'application de la méthode précédente au procédé suivant l'invention.

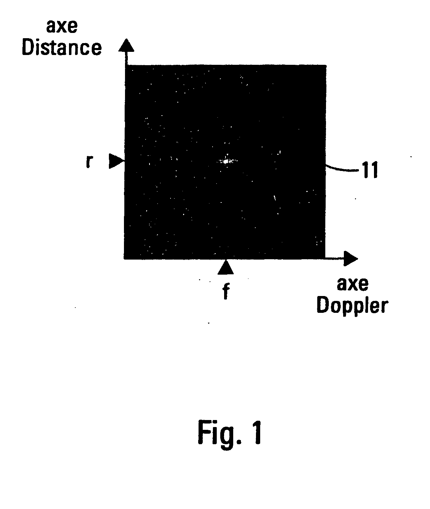

La figure 1 présente l'image SAR d'un écho ponctuel immobile dans un plan défini par un axe doppler et un axe distance. Cet écho est caractérisé par sa fréquence doppler f, sa distance r et son amplitude complexe A. On constate que cette image présente un défaut de netteté 11 selon les axes doppler et distance. Dans le cas de la figure 1, cet écho ponctuel immobile étant correctement focalisé, la pollution de l'image est due aux lobes secondaires de FFT. Cette pollution est éliminée par le procédé selon l'invention.

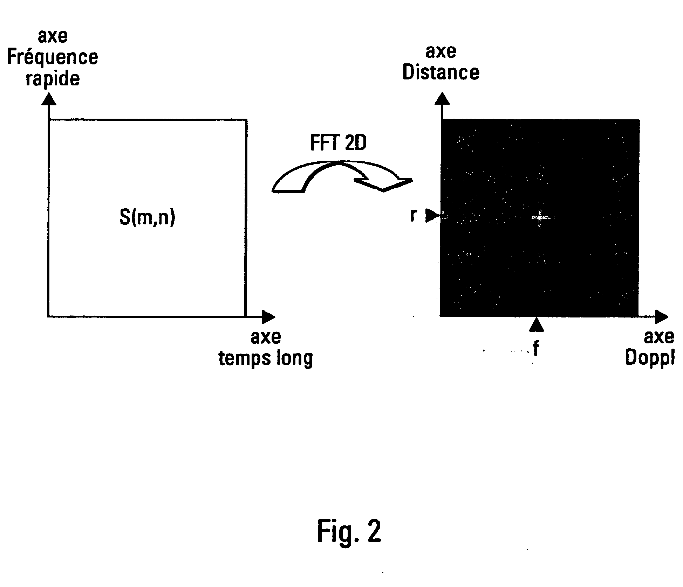

La figure 2 illustre une façon d'obtenir cette image. Le signal S(m, n) reçu par le radar, exprimé dans l'espace Temps long / Fréquence rapide, est traité par FFT 2D ou transformée de Fourier rapide suivant deux dimensions. L'axe doppler est l'image par FFT de l'axe temps long qui représente la succession des récurrences émises. L'axe distance est pour sa part l'image de l'axe fréquence rapide, qui correspond au spectre du signal reçu pendant une récurrence.

Chaque terme de la FFT s'écrit :

$$S(m,n) = A\exp(j2\pi f \frac{m}{M})\exp(j2\pi r \frac{n}{N}) \tag{1}$$

Dans l'expression (1) m est la coordonnée du point sur l'axe temps long qui varie de 0 à M-1 par valeur entière; et n est la coordonnée du point sur l'axe fréquence rapide qui varie de 0 à N-1 également par valeur entière.

L'application de cette FFT 2D à un signal ponctuel focalisé donne dans le plan axe doppler / axe distance, une image fréquentielle en sinc (sinus cardinal) qui centrée sur une fréquence doppler f et une distance r. Le sinus cardinal est le signal qui correspond à l'image par FFT d'un signal rectangulaire. Cette image fréquentielle a par ailleurs pour défaut de présenter d'importants lobes secondaires de FFT dont on constate l'effet de pollution sur l'image de la figure 1. L'application simple d'une FFT 2D à un écho ponctuel, même bien focalisé, ne donne donc pas une image distance /doppler ponctuelle. Le procédé selon l'invention complète donc ce traitement par une pondération adaptative qui va fortement atténuer ces lobes secondaires.

Si on effectue sur un écho ponctuel focalisé la FFT sur l'axe fréquence rapide, le signal correspondant s'écrit, pour une case distance D :

$$S_D(m) = A_D\exp[j(2\pi f \frac{m}{M} + \varphi_D)] \text{ avec } m \in [0, M-1] \tag{2}$$

où $A_D$ est un nombre réel et $\phi_D$ un terme de phase appartenant à l'intervalle [0, $2\pi$].

Pour un écho ponctuel défocalisé c'est à dire par exemple un écho mobile ou un écho ambigu en doppler ou en distance, la relation (2) est généralement reformulée comme suit :

$$S_D(m) = A_D(m)\exp[j(2\pi f\frac{m}{M}+\varphi(m)+\varphi_D)].\qquad(3)$$

Ici $A_D(m)$ et $\phi(m)$ sont fonction de m et dépendent de l'écho considéré. Le terme de phase $\varphi(m)$ constitue le déphasage parasite responsable de la défocalisation de l'écho considéré et des remontées de signal par les lobes secondaires.

Selon l'invention, le signal correspondant à la FFT sur l'axe fréquence rapide d'un écho ponctuel est modélisé, pour une case distance D, par la relation suivante :

$$S_D(m) = A_D\exp[j(2\pi f\frac{m}{M}+\varphi_D)] + A_D(m)\exp[j(2\pi f\frac{m}{M}+\varphi(m)+\varphi_D)]\qquad(4)$$

Selon l'invention $S_D(m)$ s'écrit donc comme la somme de deux signaux :

$$S_D^{focal}(m) = A_D\exp[j(2\pi f\frac{m}{M}+\varphi_D)]\qquad(5)$$

qui correspond à la réponse d'un écho ponctuel focalisé.

$$R_D(m) = A_D(m)\exp[j(2\pi f\frac{m}{M}+\varphi(m)+\varphi_D)\qquad(6)$$

qui correspond à la réponse d'un écho défocalisé

L'énergie du signal focalisé $S^{focal}_D$ est de préférence plus forte que celle du signal défocalisé $R_D$.

Dans le cas d'un point focalisé, $R_D(m)$ aura une valeur nulle.

Les descriptions qui suivent sont basées sur l'exploitation de la modélisation décrite par la relation (4).

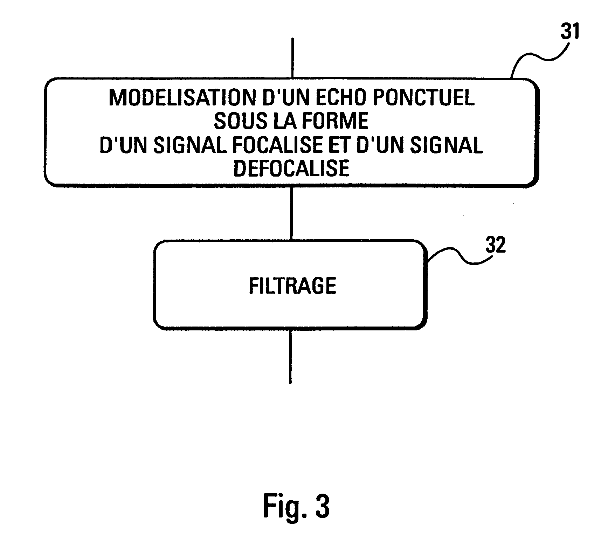

La figure 3 présente des étapes possibles du procédé selon l'invention. Dans une étape 31 le signal $S_D(m)$ est modélisé selon la relation (4) précédente. Dans une étape 32 le signal $R_D(m)$, modélisation d'un point defocalisé, est éliminé ou atténué.

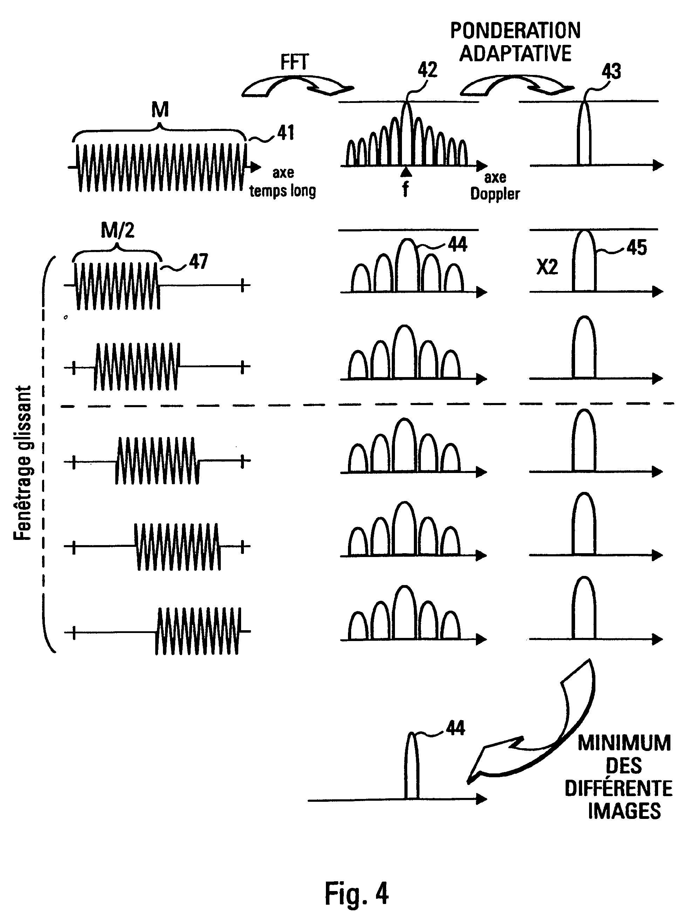

La figure 4 illustre cette étape 32 par un exemple de filtrage, appliqué sur un signal de type $S^{focal}_D(m)$ correspondant à un point focalisé. Dans ce cas $R_D(m)$ est nul.

Le chronogramme 41 est la représentation sur l'axe temps long des M échantillons du signal analysé $S^{focal}_D(m)$. Le signal étant issu d'un point focalisé sa période est constante sur l'intervalle des M échantillons.

On obtient ensuite par FFT la représentation spectrale 42 de ce signal sur l'axe doppler. Ce spectre est une fonction en sinus cardinal de la fréquence, dont la caractéristique est de présenter des lobes secondaires élevés.

On applique alors à ce spectre une pondération adaptative, également appelée "Spatially Variant Apodization", ou "SVA", selon la dénomination anglo-saxonne. L'action de cette dernière sur un signal de type sinus cardinal consiste à supprimer les lobes secondaires sans toucher au lobe principal. On obtient ainsi un signal dont la représentation spectrale 43 ne présente plus que le lobe principal.

Une méthode de pondération adaptative est notamment décrite dans le document " Spatially Variant Apodization for sidelobe control" de MM. Stankwitz, Dallaire et Finup contenu dans la revue "Proceedings of IEEE 1994 National Radar Conference, Atlanta GA, March 1994".

En parallèle, on applique ce traitement par FFT et pondération adaptative à n groupes de M/2 échantillons. Ces groupes sont pris dans une fenêtre glissante 47 parmi l'ensemble des M échantillons, de telle sorte que par glissements successifs la fenêtre ait couvert l'ensemble des M échantillons. On obtient donc n représentations spectrales 44 après FFT, puis n représentations spectrales 45 après pondération adaptative.

Ces n représentations spectrales correspondent à n portions du signal $S_D(m)$.

Du fait du plus faible nombre d'échantillons utilisés, ces représentations spectrales ont une résolution moins bonne que la représentation primaire à M échantillons. On parle de résolution fine 43 et de résolution grossière 45.

Ces différentes images sont ensuite utilisées pour une recherche du signal minimum 46. Celui-ci est obtenu en gardant pour chaque fréquence doppler le signal d'amplitude le plus faible de l'ensemble des images utilisées. Dans cette opération on utilise également l'image de résolution fine qui comme on le voit sur la figure, est nécessaire pour maintenir la bonne largeur de lobe. Ceci implique de tenir compte de la différence de gain après filtrage, entre l'image de résolution fine et les autres images. Pour cela il peut être nécessaire de les normaliser entre elles avant la recherche du minimum 46.

Le gain obtenu après traitement par FFT, de groupes de M/2 échantillons est inférieur de trois décibels à celui obtenu après traitement de groupes de M échantillons. On multiplie donc par un coefficient deux l'amplitude des spectres des images de résolution grossière.

Il apparaît donc que lorsque l'on applique le traitement décrit précédemment à un point focalisé, on peut constater que les n portions de taille M/2 du signal $S_D(m)$ ont des périodes constantes et identiques : Leurs spectres d'amplitudes sont identiques et centrés sur la même fréquence. La recherche du minimum restitue donc l'image pleine résolution.

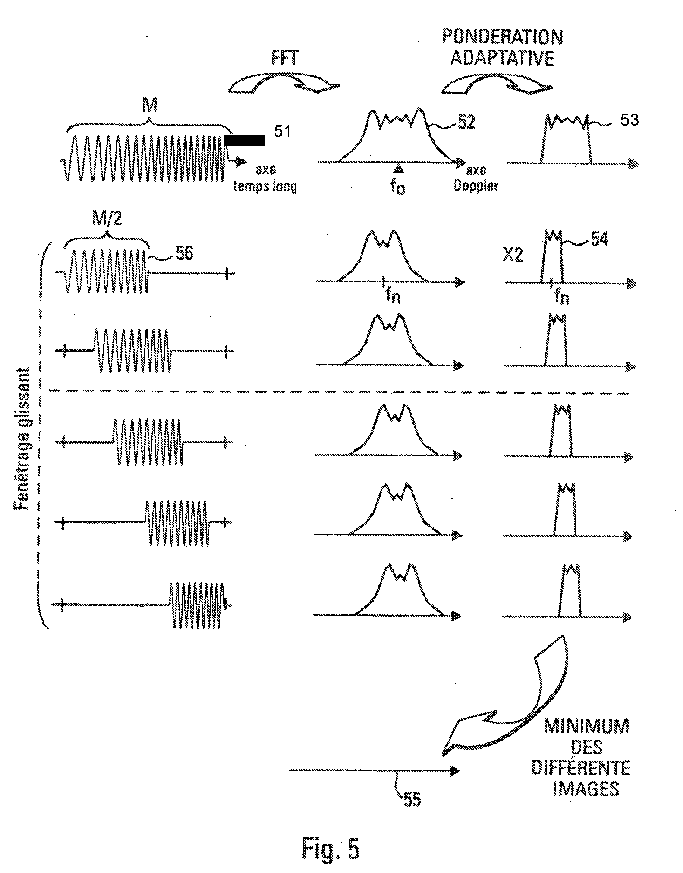

La figure 5 illustre l'application de l'exemple de filtrage sur un signal de type $R_D(m)$ correspondant à un point défocalisé. Dans ce cas $S^{focal}_D(m)$ est nul.

Un chronogramme 51 représente, sur l'axe temps long, les M échantillons du signal analysé $R_D(m)$. Le signal étant, cette fois-ci, issu d'un point défocalisé, sa période n'est plus constante sur l'intervalle des M échantillons. $R_D(m)$ est choisi ici, à titre d'exemple, avec un terme de phase parasite $\varphi(m)$ de nature quadratique, représentatif par exemple d'un point mobile en translation à vitesse constante.

On constate que le chronogramme 51 n'a plus une période constante sur l'intervalle des M échantillons. Après FFT on obtient un spectre 52 quelconque centré sur une fréquence $f_0$ auquel on applique la pondération adaptative qui restitue un signal de spectre 53 quelconque.

Comme sur la figure 4, on applique en parallèle le traitement, suivi d'une normalisation, à n groupes de M/2 échantillons, pris dans une fenêtre glissante 56 parmi l'ensemble des M échantillons. On obtient donc n représentations spectrales 54, correspondant à n portions du signal $R_D(m)$ qui, contrairement à ce qui se passe dans le cas d'un point focalisé, n'ont pas une période constante. Ces n représentations spectrales sont donc centrées sur des fréquences différentes. De même on effectue alors la recherche du signal minimum ce qui a pour effet de supprimer intégralement le signal : le point défocalisé est éliminé 55.

Le même processus appliqué au cas où $\varphi(m)$ est une fonction quelconque de m donne un résultat similaire, à ceci près que l'on a atténuation et non disparition du signal après recherche du minimum.

Les figures 4 et 5 illustrent également l'application de l'exemple de filtrage, au cas d'un point quelconque dont le signal correspondant sur l'axe temps long est décrit par la relation (4). Ce signal est exprimé comme la somme d'une composante focalisée et d'une composante défocalisée. Dans ce cas le traitement présenté conduira au maintien de la composante focalisée de l'écho et à la disparition ou au moins à une atténuation sensible de la composante défocalisée. De plus, l'élimination des lobes secondaires de FFT, au cours de l'opération, permet de s'affranchir d'une éventuelle pollution par ces lobes, pollution qui pourrait dégrader l'opération de recherche du minimum.

Les étapes 31 et 32, illustrés à la figure 3, permettent avantageusement d'obtenir, dans le système d'axe Doppler / Distance, une image débarrassée des points défocalisés. Cependant, une étape 32 telle que décrite par les figures 4 et 5 ne permet pas le retour par FFT inverse à un signal représenté sur l'axe temps long par $S^{focal}_D(m)$. En effet ce signal a un spectre en sinus cardinal avec un lobe principal et des lobes secondaires, et non un spectre limité au seul lobe principal. Cette caractéristique peut s'avérer gênante, notamment dans le cas où l'on veut utiliser certains procédés de traitement des images SAR qui s'appliquent normalement à des points focalisés dont la représentation spectrale sur l'axe doppler à la forme d'un sinus cardinal. Le fait de ne pas disposer après filtrage d'un signal de ce type peut altérer l'efficacité du traitement utilisé. Ceci est par exemple le cas des traitements de très grande résolution, communément appelés traitements d'hyper résolution.

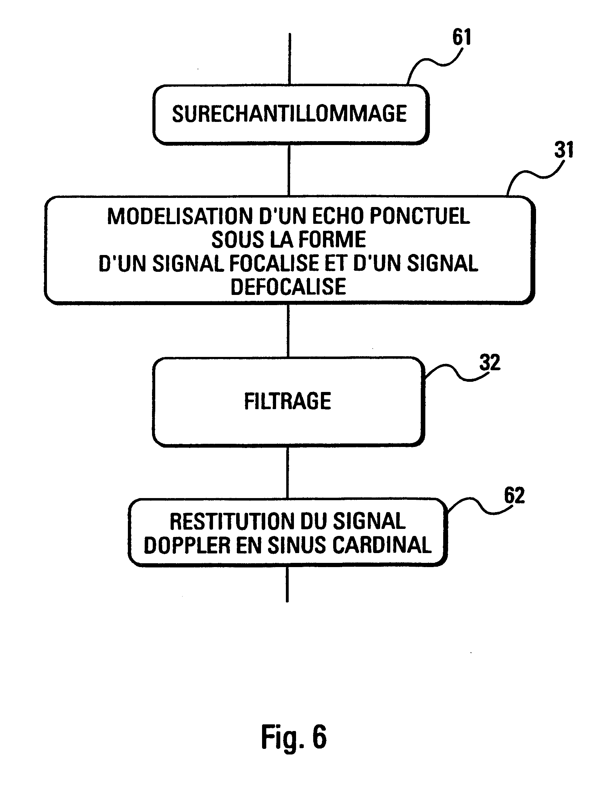

La figure 6 présente une nouvelle suite d'étapes du procédé selon l'invention pour pallier cet inconvénient. L'étape 31 de la figure 3 est précédée d'une étape 61 de suréchantillonnage sur l'axe doppler, basée sur l'extrapolation du signal $S_D(m)$ à au moins 2M échantillons. L'étape 32 de filtrage est par exemple suivie d'une étape 62 de restitution d'une image doppler en sinus cardinal.

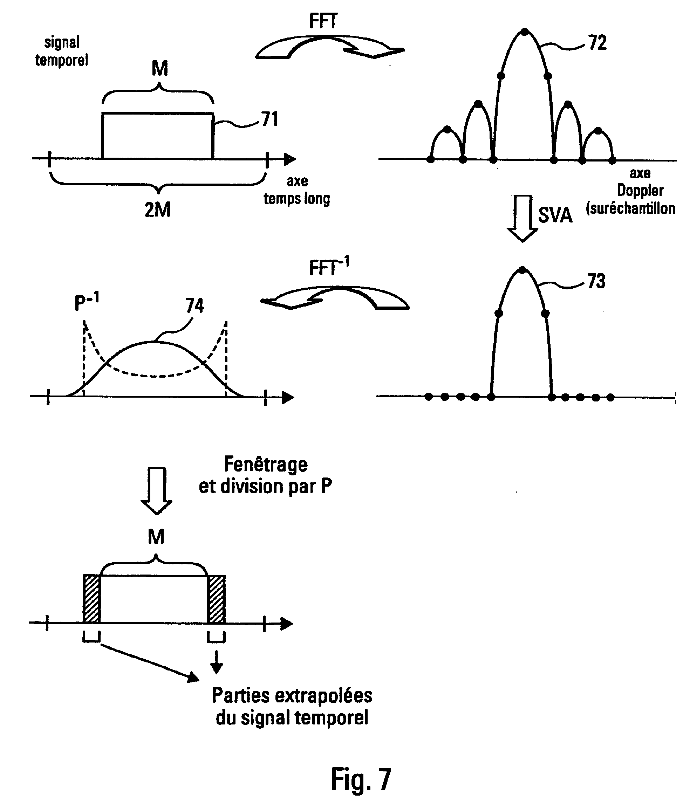

La figure 7 Illustre un principe basé sur l'introduction d'une étape de suréchantillonnage sur l'axe doppler du spectre du signal $S_D(m)$. Cette étape est préalable à l'application du traitement décrit précédemment. Elle consiste à effectuer la FFT du signal $S_D(m)$ extrapolé sur au moins 2M échantillons 71. L'extrapolation complète les M échantillons initiaux par des échantillons nuls pour obtenir au moins 2M échantillons.

Le spectre 72 obtenu après FFT sur 2M points est identique au spectre obtenu précédemment mais échantillonné deux fois plus finement. Après pondération adaptative le signal obtenu se présente sous la forme du lobe principal débarrassé des lobes secondaires.

En revanche l'image sur l'axe temps long de ce signal par FFT inverse n'est plus de la forme $S_D(m)$. C'est un signal extrapolé dont la durée est supérieure à M échantillons. C'est de plus un signal dégradé qui correspond à un signal de la forme $S_D(m)$ affecté d'une pondération P(m) dont chaque échantillon $S_D(i)$ serait multiplié par un coefficient de pondération P(i).

L'expression de la pondération P(m) qui affecte le signal, est donnée par le résultat de l'application à un signal rectangulaire de M échantillons du traitement décrit aux figures 4 et 5.

Pour restituer à ce signal sa forme originale, on effectue sa division par P(m).

Chaque échantillon $S_D(i)$ est divisé par le coefficient P(i) correspondant.

Le résultat de cette opération est un signal formé des M échantillons du signal d'origine auxquels s'adjoignent des échantillons latéraux extrapolés.

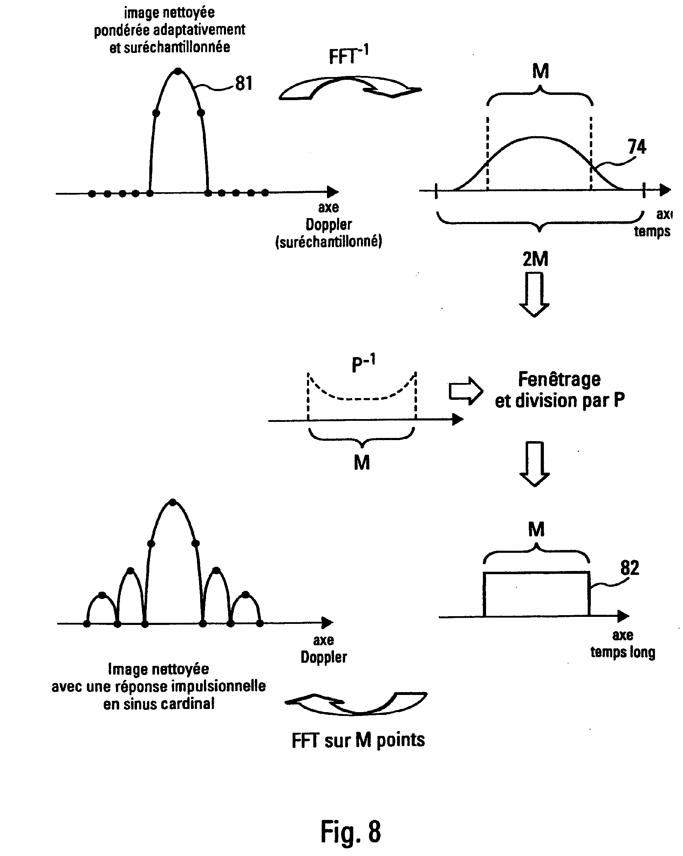

La figure 8 illustre l'application de la méthode décrite au paragraphe précédent. Après être passé par l'étape 61 de la figure 6 et avoir subi une extrapolation, le signal $S_D(m)$ est traité par FFT, pondération adaptative et recherche du minimum. Il est alors représenté par le signal 81 sur l'axe doppler suréchantillonné.

On lui applique ensuite une FFT inverse qui donne le signal temporel extrapolé et pondéré 74 présenté figure 7 dont on ne retient que les M échantillons centraux. Après application de la pondération inverse de P aux M échantillons retenus on obtient la restitution 82 d'un signal $S^{focal}_D(m)$ dont la représentation spectrale sur l'axe doppler a une expression en sinus cardinal. Ces dernières opérations constituent l'étape 62 de la figure 6.

Associée au procédé selon l'invention cette méthode permet donc avantageusement de récupérer à partir d'un signal $S_D(m)$ quelconque l'image spectrale en sinus cardinal du signal $S^{focal}_D(m)$ correspondant

Le procédé selon l'invention ainsi que la méthode de restitution qui lui est associée, ont été décrits, à titre d'exemple, avec l'emploi d'un traitement de type FFT, complété par une pondération adaptative. Ce traitement ayant pour but d'effectuer le passage du domaine axe temps long / axe fréquence rapide au domaine axe doppler / axe distance, d'autres types de traitements sont bien sûr possible, pour autant qu'ils aboutissent à la représentation spectrale des signaux.

L'étape de filtrage 32 a été décrite avec l'emploi d'un traitement par FFT, suivi d'une pondération adaptative des représentations spectrales. Ce filtrage est bien adapté à un traitement numérique. D'autres solutions peuvent bien sûr être envisagées, notamment avec des filtres analogiques.

L'invention a notamment comme avantage de ne nécessiter qu'une seule voie de réception, contrairement aux méthodes de filtrage spatial qui nécessitent au moins, pour l'analyse du signal, une voie Somme et une voie Différence. Corollairement, elle présente comme avantage de nécessiter une charge de calcul moins importante.

**Revendications**

1. Procédé d'amélioration d'une image radar obtenue à partir du signal S(m,n) reçu par le radar, exprimé dans l'espace "Temps long /Fréquence rapide", S(m, n) représentant la valeur du signal reçu pour un instant m de l'axe "temps longs" qui représente la succession des récurrences émises et une fréquence n de l'axe "fréquences rapides" qui correspond au spectre du signal reçu pendant une récurrence, le signal S(m,n) étant représenté par la relation suivante :

$$S(m,n) = A \exp(j2\pi f \frac{m}{M}) \exp(j2\pi r \frac{n}{N})$$

où M et N définissent l'espace "Temps long / Fréquence rapide" considéré, m variant de 0 à M-1 par valeur entière; et où n variant de 0 à N-1 également par valeur entière ;
**caractérisé en ce qu'**il comporte au moins :

- une étape (31) de modélisation durant laquelle on applique au signal S(m,n) une transformation de Fourier sur l'axe des fréquences rapides, le signal $S_D(m)$ (42) obtenu, pour chaque case distance D, ayant pour expression :

$$S_D(m) = S_D^{focal}(m) + R_D(m)$$

où $S_D^{focal}(m)$ représente un signal focalisé, et $R_D(m)$ un signal défocalisé;

- une deuxième étape (32) de filtrage durant laquelle :
- on forme une pluralité de signaux (47, 56) constitués de M/2 échantillons consécutifs du signal $S_D(m)$, obtenus en considérant une fenêtre glissante de M/2 échantillons, chaque signal étant constitué en effectuant des décalages successifs de la fenêtre d'un ou plusieurs échantillons ;
- on applique au signal $S_D(m)$ et à chacun des signaux formés, une transformation de Fourier sur l'axe des temps longs,

- on détermine pour chaque fréquence, sur l'ensemble des signaux (42, 44) obtenus par transformation du signal $S_D(m)$ et par transformation des signaux formés, le signal présentant l'amplitude minimale, puis on construit un signal présentant pour chaque fréquence l'amplitude minimale ainsi déterminée, le signal (46) ainsi obtenu correspondant au signal obtenu après élimination du signal défocalisé $R_D(m)$ dans le signal $S_D(m)$.

**2.** Procédé selon la revendication 1, **caractérisé en ce que** $S_D$ (m) (41, 51) est modélisé, pour une case distance D, conformément à la relation suivante :

$$S_D(m) = A_D \exp[j(2\pi f \frac{m}{M} + \varphi_D)] + A_D(m) \exp[j(2\pi f \frac{m}{M} + \varphi(m) + \varphi_D)$$

où $A_D$ est un nombre réel et $\varphi_D$ un terme de phase appartenant à l'intervalle $[0, 2\pi]$ ; $A_D(m)$ représentant un terme d'amplitude fonction de m et $\varphi(m)$ un terme de phase fonction de m représentant un déphasage parasite responsable de la défocalisation du signal et des remontées de signal par les lobes secondaires.

**3.** Procédé selon l'une quelconque des revendications précédentes, **caractérisé en ce que**, lors de l'étape (32) de filtrage, on applique un filtrage des lobes secondaires à l'ensemble des signaux (42, 44) obtenus par transformation de Fourier du signal $S_D$ (m) (41, 51) ou des signaux (47, 56) obtenus à partir de $S_D(m)$ au travers d'une fenêtre glissante, le filtrage étant appliqué avant construction du signal (46, 55) présentant pour chaque fréquence l'amplitude minimale.

**4.** Procédé selon la revendication 3, **caractérisé en ce que**, la transformation de Fourier du signal $S_D(m)$ (41, 51) et des signaux (47, 56) formés à partir de $S_D(m)$ étant effectuée par FFT, les lobes secondaires de FFT sont éliminés par pondération adaptative.

**5.** Procédé selon l'une quelconque des revendications 3 ou 4, **caractérisé en ce que** les n représentations spectrales (44) des signaux (47) obtenus à partir de $S_D$ (m) au travers de la fenêtre glissante, font l'objet d'une normalisation par rapport à la représentation spectrale de $S_D$ (m) (42), normalisation consistant en une multiplication par deux de leur niveau.

**6.** Procédé selon l'une quelconque des revendications précédentes, **caractérisé en ce qu'**il comporte une étape (61) de suréchantillonnage de la représentation spectrale de l'écho sur l'axe doppler, qui précède l'étape (31) de modélisation.

**7.** Procédé selon la revendication 6, **caractérisé en ce que** le suréchantillonnage en doppler est réalisé à partir du signal $S_{D(M)}$ (41, 51), extrapolé à au moins 2M échantillons par ajout d'au moins M échantillons nuls au M échantillons constituants.

**8.** Procédé selon l'une quelconque des revendications précédentes, **caractérisé en ce qu'**il comporte une étape (62) de reconstitution d'un écho ponctuel focalisé (82) à partir de l'image spectrale (81)

**Claims**

**1.** Method for improving a radar image obtained from the signal S(m, n) received by the radar, expressed in the "long time/fast frequency" space, S(m, n) representing the value of the signal received for an instant m of the "long time" axis which represents the succession of recurrences emitted and a frequency n of the "fast frequency" axis which corresponds to the spectrum of the signal received during a recurrence, the signal S(m, n) being represented by the following relation:

$$S(m,n) = A \exp(j2\pi f \frac{m}{M}) \exp(j2\pi r \frac{n}{N})$$

where M and N define the "long time/fast frequency" space considered, m varying from 0 to M-1 by integer value; and where n varies from 0 to N-1 likewise by integer value;
**characterized in that** it comprises at least:

- a step (31) of modelling during which a Fourier transformation is applied to the signal S(m, n) on the fast frequency axis, the signal $S_D(m)$ (42) obtained, for each distance bin D, having the expression:

$$S_D(m) = S_D^{focal}(m) + R_D(m)$$

where $S_D^{focal}(m)$ represents a focused signal and $R_D(m)$ a defocused signal;

- a second step (32) of filtering during which:
- a plurality of signals (47, 56) is formed, constructed of M/2 consecutive samples of the signal $S_D(m)$, obtained by considering a sliding window of M/2 samples, each signal being constructed by performing successive shifts of the window by one or more samples;
- a Fourier transformation is applied to the signal $S_D(m)$ and to each of the signals formed, on the long time axis,
- for each frequency, over the set of signals (42, 44) obtained by transformation of the signal $S_D(m)$ and by transformation of the signals formed, the signal exhibiting the minimum amplitude is determined, then a signal exhibiting for each frequency the minimum amplitude thus determined is constructed, the signal (46) thus obtained corresponding to the signal obtained after eliminating the defocused signal $R_D(m)$ from the signal $S_D(m)$.

2. Method according to Claim 1, **characterized in that** $S_D(m)$ (41, 51) is modelled, for a distance bin D, in accordance with the following relation:

$$S_D(m) = A_D \exp[\,j(2\pi f \frac{m}{M} + \varphi_D)] + A_D(m)\exp[\,j(2\pi f \frac{m}{M} + \varphi(m) + \varphi_D)$$

where $A_D$ is a real number and $\varphi_D$ a phase term belonging to the interval [0, 2π]; $A_D(m)$ representing an amplitude term dependent on m and $\varphi(m)$ a phase term dependent on m representing a spurious phase shift responsible for the defocusing of the signal and of the signal rises through the side lobes.

3. Method according to any one of the preceding claims, **characterized in that**, during the filtering step (32), a filtering of the side lobes is applied to the set of signals (42, 44) obtained by Fourier transformation of the signal $S_D(m)$ (41, 51) or of the signals (47, 56) obtained from $S_D(m)$ through a sliding window, the filtering being applied before constructing the signal (46, 55) exhibiting the minimum amplitude for each frequency.

4. Method according to Claim 3, **characterized in that**, since the Fourier transformation of the signal $S_D(m)$ (41, 51) and of the signals (47, 56) formed from $S_D(m)$ is performed by FFT, the FFT side lobes are eliminated by adaptive weighting.

5. Method according to either one of Claims 3 and 4, **characterized in that** the n spectral representations (44) of the signals (47) obtained from $S_D(m)$ through the sliding window, form the subject of a normalization with respect to the spectral representation of $S_D(m)$ (42), the normalization consisting in multiplying their level by two.

6. Method according to any one of the preceding claims, **characterized in that** it comprises a step (61) of oversampling the spectral representation of the echo on the Doppler axis, which precedes the modelling step (31).

7. Method according to Claim 6, **characterized in that** the Doppler oversampling is carried out on the basis of the signal $S_D(m)$ (41, 51), extrapolated to at least 2M samples by appending at least M zero samples to the M constituent samples.

8. Method according to any one of the preceding claims, **characterized in that** it comprises a step (62) of reconstructing a focused pointlike echo (82) from the spectral image (81).

**Patentansprüche**

1. Verfahren zur Verbesserung eines Radarbilds, das ausgehend von dem vom Radar empfangenen Signal S(m,n) erhalten wird, ausgedrückt im Raum "Langzeit / Schnellfrequenz", wobei S(m,n) den Wert des empfangenen Signals für einen Zeitpunkt m der "Langzeiten"-Achse, die die Folge der gesendeten Wiederholungen darstellt, und eine Frequenz n der "Schnellfrequenzen"-Achse darstellt, die dem Spektrum des empfangenen Signals während einer Wiederholung entspricht, wobei das Signal S(m,n) durch die folgende Beziehung dargestellt wird:

$$S(m,n) = A \exp\left(j2\pi f \frac{m}{M}\right) \exp\left(j2\pi r \frac{n}{N}\right)$$

wobei M und N den betrachteten Raum "Langzeit /Schnellfrequenz" definieren, wobei m von 0 bis M-1 in ganzzahligem Wert variiert und wobei n von 0 bis N-1 ebenfalls in ganzzahligem Wert variiert;
**dadurch gekennzeichnet, dass** es mindestens aufweist:

- einen Schritt (31) der Modellierung, während dem an das Signal S(m,n) eine Fourier-Transformation auf der Schnellfrequenzen-Achse angewendet wird, wobei das erhaltene Signal $S_D(m)$ (42) für jedes Entfernungsfeld D folgendermaßen ausgedrückt wird:

$$S_D(m) = S_D^{focal}(m) + R_D(m)$$

wobei $S_D^{focal}(m)$ ein fokussiertes Signal und $R_D(m)$ ein defokussiertes Signal darstellt;

- einen zweiten Schritt (32) der Filterung, während dem:

- mehrere Signale (47, 56) geformt werden, die aus M/2 aufeinanderfolgenden Tastproben des Signals $S_D(m)$ bestehen, die unter Berücksichtigung eines gleitenden Fensters von M/2 Tastproben erhalten werden, wobei jedes Signal gebildet wird, indem aufeinanderfolgende Verschiebungen des Fensters um eine oder mehrere Tastproben durchgeführt werden;
- an das Signal $S_D(m)$ und an jedes der geformten Signale eine Fourier-Transformation auf der Langzeiten-Achse angewendet wird,
- für jede Frequenz an der Gesamtheit der Signale (42, 44), die durch Transformation des Signals $S_D(m)$ und durch Transformation der geformten Signale erhalten werden, das Signal bestimmt wird, das die minimale Amplitude hat, dann ein Signal konstruiert wird, das für jede Frequenz die so bestimmte minimale Amplitude hat, wobei das so erhaltene Signal (46) dem Signal entspricht, das nach Entfernen des defokussierten Signals $R_D(m)$ im Signal $S_D(m)$ erhalten wird.

2. Verfahren nach Anspruch 1, **dadurch gekennzeichnet, dass** $S_D(m)$ (41, 51) für ein Entfernungsfeld D gemäß der folgenden Beziehung modelliert wird:

$$S_D(m) = A_D \exp\left[j\left(2\pi f \frac{m}{M} + \varphi_D\right)\right] + A_D(m) \exp\left[j\left(2\pi f \frac{m}{M} + \varphi(m) + \varphi_D\right)\right]$$

wobei $A_D$ eine reale Zahl und $\varphi_D$ ein Phasenterm ist, der zum Intervall $[0, 2\pi]$ gehört; wobei $A_D(m)$ einen von m abhängigen Amplitudenterm und $\varphi(m)$ einen von m abhängigen Phasenterm darstellt, der eine Störphasenverschiebung darstellt, die für die Defokussierung des Signals und die Signalanstiege durch die Nebenkeulen verantwortlich ist.

3. Verfahren nach einem der vorhergehenden Ansprüche, **dadurch gekennzeichnet, dass** im Filterungsschritt (32) eine Filterung der Nebenkeulen an der Gesamtheit der Signale (42, 44), die durch Fourier-Transformation des Signals $S_D$ (m) (41, 51) erhalten werden, oder der Signale (47, 56), die ausgehend von $S_D$ (m) durch ein gleitendes Fenster erhalten werden, angewendet wird, wobei die Filterung vor der Konstruktion des Signals (46, 55) angewendet wird, das für jede Frequenz die minimale Amplitude hat.

4. Verfahren nach Anspruch 3, **dadurch gekennzeichnet, dass**, da die Fourier-Transformation des Signals $S_D$ (m) (41, 51) und der ausgehend von $S_D$ (m) geformten Signale (47, 56) durch FFT durchgeführt wird, die Nebenkeulen von FFT durch adaptive Gewichtung entfernt werden.

5. Verfahren nach einem der Ansprüche 3 oder 4, **dadurch gekennzeichnet, dass** die n spektralen Darstellungen (44) der Signale (47), die ausgehend von $S_D$ (m) durch das gleitende Fenster erhalten werden, Gegenstand einer Normalisierung bezüglich der spektralen Darstellung von $S_D$ (m) (42) sind, wobei die Normalisierung aus einer Verdoppelung ihres Pegels besteht.

6. Verfahren nach einem der vorhergehenden Ansprüche, **dadurch gekennzeichnet, dass** es einen Schritt (61) der Überabtastung der spektralen Darstellung des Echos auf der Doppler-Achse aufweist, der vor dem Modellierungsschritt (31) liegt.

7. Verfahren nach Anspruch 6, **dadurch gekennzeichnet, dass** die Doppler-Überabtastung ausgehend von dem Signal $S_D$ (m) (41, 51) durchgeführt wird, das auf mindestens 2M Tastproben durch Hinzufügen von mindestens M Tastproben Null zu den M bestehenden Tastproben extrapoliert wird.

8. Verfahren nach einem der vorhergehenden Ansprüche, **dadurch gekennzeichnet, dass** es einen Schritt (62) der Wiederherstellung eines fokussierten punktförmigen Echos (82) ausgehend vom spektralen Bild (81) aufweist.

**Fig. 1**

axe
**Fréquence
rapide**

**S(m,n)**

**FFT 2D**

axe
**temps long**

axe
**Distance**

r ▶

**f**

axe
**Doppl**

# Fig. 2

**31**

MODELISATION D'UN ECHO PONCTUEL
SOUS LA FORME
D'UN SIGNAL FOCALISE ET D'UN SIGNAL
DEFOCALISE

**32**

FILTRAGE

# Fig. 3

Fig. 4

Fig. 5

**61**

SURECHANTILLOMMAGE

**31**

MODELISATION D'UN ECHO PONCTUEL
SOUS LA FORME
D'UN SIGNAL FOCALISE ET D'UN SIGNAL
DEFOCALISE

**32**

FILTRAGE

**62**

RESTITUTION DU SIGNAL
DOPPLER EN SINUS CARDINAL

Fig. 6

Fig. 7

image nettoyée
pondérée adaptativement
et suréchantillonnée

FFT$^{-1}$

81

axe
Doppler
(suréchantillonné)

M

74

2M

axe
temps

P$^{-1}$

M

Fenêtrage
et division par P

M

82

axe
temps long

Image nettoyée
avec une réponse impulsionnelle
en sinus cardinal

axe
Doppler

FFT sur M points

## Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6046695 A
- US 5854602 A

- EP 0544546 A3